# EUROPÄISCHE PATENTANMELDUNG

(11) **EP 4 186 734 A1**
(43) Veröffentlichungstag der Anmeldung: **31.05.2023**
(21) Anmeldenummer: 22205692.1
(22) Anmeldetag: 07.11.2022
(51) Int. Cl.: B60L 3/00, B60L 9/28, H02H 7/12, H02H 7/122, H02H 7/125, H02M 5/45, H02M 1/42

(54) **VORRICHTUNG ZUM GESTEUERTEN HERSTELLEN EINES KURZSCHLUSSES IN EINEM ANTRIEBSSYSTEM EINES SCHIENENFAHRZEUGS**

(30) Priorität: 30.11.2021 DE 102021213545
(71) Anmelder: Siemens Mobility GmbH, 81739 München (DE)
(72) Erfinder: Nagel, Andreas, 90431 Nürnberg (DE); Schönewolf, Stefan Hans Werner, 90431 Nürnberg (DE)
(74) Vertreter: Siemens Patent Attorneys

(57) **Zusammenfassung**

Die Erfindung betrifft eine Vorrichtung zum gesteuerten Herstellen eines Kurzschlusses in einem Antriebssystem eines Schienenfahrzeugs. Dabei umfasst das Antriebssystem einen ersten Stromrichter und einen Gleichspannungszwischenkreis, in welchem zumindest ein Zwischenkreiskondensator angeordnet ist, an dem eine Zwischenkreisspannung anliegt. Die Vorrichtung umfasst insbesondere einen ungesteuerten ersten Gleichrichter, dessen Eingangsseite mit der Eingangsseite des ersten Stromrichters verbunden ist, einen gesteuerten Halbleiterschalter in einem ersten Zweig, der mit einem ersten Spannungspotenzial und mit einem zweiten Spannungspotenzial der Ausgangsseite des ersten Gleichrichters verbunden ist, wobei mittels des Halbleiterschalters die Ausgangsseite des ersten Gleichrichters gesteuert kurzschließbar ist, zumindest einen ersten Kondensator in einem zu dem ersten Zweig parallel geschalteten zweiten Zweig und zumindest eine Spannungsquelle, mittels welcher eine an dem ersten Kondensator anliegende Spannung oberhalb der Zwischenkreisspannung eingestellt wird.

## Beschreibung

Die Erfindung betrifft Vorrichtung zum gesteuerten Herstellen eines Kurzschlusses in einem Antriebssystem eines Schienenfahrzeugs, wobei das Antriebssystem einen ersten Stromrichter, welcher mittels Leistungshalbleiterelementen eine an einer Eingangsseite anliegende Wechselspannung in eine an einer Ausgangsseite anliegende Gleichspannung wandelt, oder welcher eine an der Eingangsseite anliegende Gleichspannung in eine an der Ausgangsseite anliegende Wechselspannung wandelt, und einen Gleichspannungszwischenkreis umfasst, welcher von der Ausgangsseite des ersten Stromrichters gespeist wird oder welcher die Eingangsseite des ersten Stromrichters speist, und in welchem zumindest ein Zwischenkreiskondensator angeordnet ist, an dem eine Zwischenkreisspannung anliegt.

Schienenfahrzeuge, insbesondere für den Lokal-, Regional- und Fernverkehr, werden über ein Versorgungsnetz mit elektrischer Energie versorgt. Die Spannung des Versorgungsnetzes beträgt in Europa bei einer Wechselspannung typischerweise 25kV, 50Hz, bzw. 15kV, 16.7Hz, bei einer Gleichspannung hingegen 1.5kV bzw. 3kV.

Für einen Betrieb an einem einen Wechselstrom führenden Versorgungsnetz weist das Antriebssystem eines Schienenfahrzeugs üblicherweise einen Traktionstransformator auf, dessen Primärseite mit einer Oberleitung des Versorgungsnetzes mittels eines Stromabnehmers verbunden wird. Der Traktionstransformator transformiert die primärseitig anliegende Wechselspannung auf eine sekundärseitig anliegende niedrigere Wechselspannung. Die Sekundärseite des Traktionstransformators ist mit einem netzseitigen Stromrichter des Antriebssystems verbunden, welcher die an diesem eingangsseitig anliegende Wechselspannung in eine ausgangsseitig anliegende Gleichspannung wandelt. Ein solcher netzseitiger Stromrichter ist beispielsweise als ein Vierquadrantensteller (4QS) ausgestaltet. Die ausgangsseitig anliegende Gleichspannung dient einer Speisung eines Zwischenkreises, insbesondere eines Gleichspannungszwischenkreises, aus welchem ein oder mehrere lastseitige Stromrichter gespeist werden. Ein lastseitiger Stromrichter ist beispielsweise als ein Pulswechselrichter (PWR) ausgestaltet, welcher die an diesem eingangsseitig anliegende Gleichspannung in eine ausgangsseitig anliegende Wechselspannung variabler Amplitude und Frequenz wandelt, mit welcher ein oder mehrere Traktionsmotoren gespeist werden.

Der Gesamtwirkungsgrad eines solchen Antriebssystems eines Schienenfahrzeugs kann durch eine Reduzierung der Streuinduktivität des Traktionstransformators insbesondere in Verbindung mit einem Einsatz von Leistungshalbleiterschaltern auf Basis von Siliziumcarbid (SiC), Galliumnitrid (GaN) oder Diamant in dem netzseitigen Stromrichter erhöht werden, wodurch beispielsweise ein Energieverbrauch des Schienenfahrzeugs vorteilhaft reduziert werden kann.

Eine geringere Streuinduktivität und damit einhergehende niedrigere Kurzschlussspannung des Traktionstransformators bewirken jedoch nachteilig, dass bei Auftreten eines Kurzschlusses in dem Zwischenkreis aufgrund der geringen Streuinduktivität ein schneller und starker Anstieg des durch die Halbleiterelemente des netzseitigen Stromrichters fließenden Kurzschlussstroms auftritt. Speziell kann ein solcher Stoßstrom durch antiparallel zu den Leistungshalbleiterschaltern geschaltete oder intrinsisch in den Leistungshalbleiterschaltern enthaltene Freilaufdioden fließen und in diesen zu einer hohen Belastung oder sogar zu deren Zerstörung führen. Dies ist einerseits auf den erhöhten Stoßstrom bedingt durch die reduzierte Streuinduktivität, andererseits auf die Tatsache, dass die Halbleiterelemente auf Basis von Siliziumcarbid (SiC), Galliumnitrid (GaN) oder Diamant aufgrund einer im Vergleich zu Silizium (Si) kleineren Chipfläche weniger Verlustwärme speichern und ableiten können, sodass bei einem Stromstoß die in dem Halbleiterelement entstehende Wärme nicht ausreichend schnell abgeführt werden kann, zurückzuführen.

Ein Schutz der Halbleiterelemente des netzseitigen Stromrichters bei einem Kurzschluss in dem Zwischenkreis kann gemäß der europäischen Patentanmeldung EP 3 575 127 A1 durch Vorsehen einer speziellen Kurzschlussschutzvorrichtung erzielt werden. Diese ist parallel zu der Sekundärseite des Traktionstransformators sowie parallel zu Eingängen des netzseitigen Stromrichters angeordnet und weist einen Bypassschalter bestehend aus zwei antiparallel geschalteten Thyristoren auf. Bei einem Kurzschluss in dem Zwischenkreis werden die Thyristoren von einer Steuervorrichtung eingeschaltet und bewirken ein Kurzschließen der Sekundärseite des Traktionstransformators bzw. der Eingänge des netzseitigen Stromrichters, sodass keine bzw. nur begrenzte Ströme in den Halbleiterelementen fließen.

Eine Steigerung des Gesamtwirkungsgrads des Antriebssystems wird insbesondere dadurch erzielt, dass die oben genannten Leistungshalbleiterschalter auf Basis von Siliziumcarbid (SiC), Galliumnitrid (GaN) oder Diamant eine im Vergleich zu Leistungshalbleiterschaltern auf Basis von Silizium höhere Schaltfrequenz aufgrund kürzerer Schaltzeiten ermöglichen. Diese schnellen Schaltvorgänge können aufgrund dadurch auftretender schneller Spannungsanstiege an den Thyristoren jedoch ein ungewolltes Durchsteuern, ein so genanntes Überkopfzünden, hervorrufen. Ein hierdurch gegebenenfalls verursachter Kurzschluss, welcher nicht durch eine fehlerhafte Komponente des Antriebssystems verursacht ist, ist für den Betrieb des Schienenfahrzeugs jedoch nachteilig, da mit diesem eine Störung des Schienenverkehrs einhergeht.

Aufgabe des Erfindung ist es demnach, eine Vorrichtung anzugeben, welche ein zuverlässiges gesteuertes Kurzschließen zum Schutz von Leistungshalbleiterelementen in einem Stromrichter eines Antriebssystems eines Schienenfahrzugs sicherstellt.

Diese Aufgabe wird durch eine Vorrichtung, Antriebssysteme für ein Schienenfahrzeug sowie ein Schienenfahrzeug mit den jeweiligen Merkmalen der unabhängigen Patentansprüche gelöst. Weiterbildungen der Vorrichtungen sind in abhängigen Patentansprüchen angegeben.

Ein erster Aspekt der Erfindung betrifft eine Vorrichtung zum gesteuerten Herstellen eines Kurzschlusses in einem Antriebssystem eines Schienenfahrzeugs. Dabei umfasst das Antriebssystem einen ersten Stromrichter, welcher mittels Leistungshalbleiterelementen eine an einer Eingangsseite anliegende Wechselspannung in eine an einer Ausgangsseite anliegende Gleichspannung wandelt, oder welcher eine an der Eingangsseite anliegende Gleichspannung in eine an der Ausgangsseite anliegende Wechselspannung wandelt, und einen Gleichspannungszwischenkreis, welcher von der Ausgangsseite des ersten Stromrichters gespeist wird oder welcher die Eingangsseite des ersten Stromrichters speist, und in welchem zumindest ein Zwischenkreiskondensator angeordnet ist, an dem eine Zwischenkreisspannung anliegt. Die Vorrichtung umfasst dabei einen ungesteuerten ersten Gleichrichter, dessen Eingangsseite mit der Eingangsseite des ersten Stromrichters verbunden ist und welcher mittels Halbleiterdioden die an der Eingangsseite des ersten Stromrichters anliegende Wechselspannung in eine Gleichspannung wandelt, oder dessen Eingangsseite mit der Ausgangsseite des ersten Stromrichters verbunden ist und welcher mittels Halbleiterdioden die an der Ausgangsseite des ersten Stromrichters anliegende Wechselspannung in eine Gleichspannung wandelt, wobei die Gleichspannung jeweils an einer Ausgangsseite des ersten Gleichrichters anliegt, einen gesteuerten Halbleiterschalter, welcher in einem ersten Zweig angeordnet ist, der mit einem ersten Spannungspotenzial und mit einem zweiten Spannungspotenzial der Ausgangsseite des ersten Gleichrichters verbunden ist, wobei mittels des Halbleiterschalters die Ausgangsseite des ersten Gleichrichters gesteuert kurzschließbar ist, zumindest einen ersten Kondensator, wobei der erste Kondensator in einem zweiten Zweig angeordnet ist, welcher zu dem ersten Zweig parallel geschaltet ist, und zumindest eine Spannungsquelle, mittels welcher eine an dem ersten Kondensator anliegende Spannung oberhalb der Zwischenkreisspannung eingestellt wird.

Durch die in einem Antriebssystem eines Schienenfahrzeugs eingesetzte erfindungsgemäße Vorrichtung wird vorteilhaft ein zuverlässiger Schutz der Leistungshalbleiterelemente eines Stromrichters vor einer Beschädigung oder Zerstörung aufgrund von Stoßströmen, wie sie insbesondere bei einem Kurzschluss in dem Gleichspannungszwischenkreis auftreten können, gewährleistet. Aufgrund dieses Schutzes wird ein Einsatz von Leistungshalbleiterelementen auf Basis eines Halbleitermaterials mit einem größeren Bandabstand als Silizium, insbesondere die einleitend genannten SiC, GaN oder Diamant, in einem netzseitigen Stromrichter insbesondere in Kombination mit einem Traktionstransformator mit geringer Streuinduktivität ermöglicht, wodurch ein energieeffizientes Antriebssystem des Schienenfahrzeugs verwirklicht werden kann. In gleicher Weise wird durch die erfindungsgemäße Vorrichtung ein Einsatz von entsprechenden Leistungshalbleiterelementen in einem lastseitigen Stromrichter insbesondere in Kombination mit einem oder mehreren Traktionsmotoren mit geringer Streuinduktivität ermöglicht.

Die erfindungsgemäße Vorrichtung ist somit sowohl für den Schutz von Leistungshalbleiterelementen eines eingangsseitigen Stromrichters als auch eines lastseitigen Stromrichters in einem Antriebssystem eines Schienenfahrzeugs entsprechend dem einleitend erläuterten Antriebssystem für den Betrieb an einem Wechselspannungsversorgungsnetz einsetzbar. In einem solchen Antriebssystem wird die Eingangsseite des Gleichrichters der Vorrichtung für einen Schutz der Leistungshalbleiterelemente des netzseitigen Stromrichters mit der Eingangsseite dieses Stromrichters verbunden bzw. mit dieser elektrisch parallel geschaltet, wobei die Eingangsseite des netzseitigen Stromrichters mit Anschlüssen der Sekundärwicklung des Traktionstransformators verbunden ist, oder es wird die Eingangsseite des Gleichrichters für einen Schutz der Leistungshalbleiterelemente des lastseitigen Stromrichters mit der Ausgangsseite dieses Stromrichters verbunden bzw. dieser elektrisch parallel geschaltet, wobei die Ausgangsseite des lastseitigen Stromrichters mit den drei Phasen einer Statorwicklung des zumindest einen Traktionsmotors verbunden ist.

Die erfindungsgemäße Vorrichtung ist in gleicher Weise ebenso in einem Antriebssystem eines Schienenfahrzeugs einsetzbar, welches an einem einen Gleichstrom führenden Versorgungsnetz betrieben wird. In einem solchen Antriebssystem ist der Gleichspannungszwischenkreis über einen Stromabnehmer direkt mit einer Oberleitung oder einer Stromschiene des Versorgungsnetzes verbunden, wobei beispielsweise ein ergänzendes Eingangsfilter zum Filtern von Störströmen vorgesehen sein kann. Entsprechend wird in diesem Fall die Eingangsseite des Gleichrichters der Vorrichtung mit der Ausgangsseite des Stromrichters, insbesondere wiederum ein von dem Gleichspannungszwischenkreis gespeister Pulswechselrichter, verbunden bzw. wird wiederum die Eingangsseite des Gleichrichters mit der Ausgangsseite des Stromrichters elektrisch parallel geschaltet. Dies ist insbesondere bei Einsatz von Traktionsmotoren mit geringer Streuinduktivität sowie parallel geschalteter Stromrichter, welche jeweils einen oder mehrere Traktionsmotoren speisen, vorteilhaft, da bei einem Kurzschluss in einem der Stromrichter die Dioden des anderen Stromrichters geschützt werden.

Der ungesteuerte erste Gleichrichter der erfindungsgemäßen Vorrichtung ist beispielsweise als ein so genannter Brückengleichrichter ausgestaltet. Ein solcher weist in bekannter Weise eine Mehrzahl ausgangsseitig elektrisch parallel geschalteter Zweige auf, wobei in jedem Zweig zwei Dioden elektrisch in Reihe geschaltet sind, deren Mittelpunkt einen jeweiligen Eingang des Gleichrichters darstellen, an dem ein Spannungspotenzial der jeweiligen Phase der zu wandelnden Wechselspannung anliegt. Die Anzahl paralleler Zweige ist entsprechend von der Anzahl Phasen der eingangsseitig anliegenden Wechselspannung abhängig. So weist ein mit Anschlüssen einer Sekundärwicklung des Traktionstransformators bzw. mit der Eingangsseite des netzseitiger Stromrichters verbundener erster Gleichrichter zwei parallele Zweige mit gesamt vier Dioden, beispielsweise entsprechend einem so genannten ungesteuerten Brückengleichrichters (B2U), auf, während ein mit den drei Phasen einer Statorwicklung eines Traktionsmotors verbundener erster Gleichrichter drei parallele Zweige mit gesamt sechs Dioden, beispielsweise entsprechend einer so genannten ungesteuerten Drehstrombrücke (B6U), aufweist. Bei beispielsweise zwei Sekundärwicklungen des Traktionstransformators sowie zwei mit diesen verbundenen netzseitigen Stromrichtern kann entsprechend ein erster Gleichrichter mit vier parallelen Zweigen und gesamt acht Dioden vorgesehen werden.

Der gesteuerte Halbleiterschalter ist vorzugsweise als ein Thyristor ausgestaltet, alternativ kann dieser jedoch ebenfalls als ein GTO (Gate Turn-Off) -Thyristor oder als ein IGCT (Integrated Gate-Commutated Thyristor) ausgestaltet sein. Thyristoren sind schaltbare Halbleiterelemente, welche in einem Grundzustand nichtleitend sind und durch Einprägen eines Ansteuersignals an einer Gate-Elektrode leitend geschaltet werden können. Dieses Schalten wird auch als Zünden des Thyristors bezeichnet. Während ein Thyristor bei Unterschreiten eines Mindeststroms wieder nichtleitend wird, kann ein GTO-Thyristor bzw. IGCT über die Gate-Elektrode gesteuert wieder nichtleitend geschaltet werden. Ein gesteuertes Schalten des Halbleiterschalters, durch das dieser leitend wird, bewirkt, dass die Eingangsseite des Gleichrichters kurzgeschlossen wird, wodurch entsprechend auch die Eingangsseite bzw. die Ausgangsseite des Stromrichters kurzgeschlossen wird. Durch Einsatz eines Thyristors mit einer im Verglich zu den zu schützenden Leistungshalbleiterelementen des Stromrichters geringeren Durchlassspannung wird der hauptsächliche Anteil des Fehlerstroms von dem Gleichrichter und dem Thyristor an den Leistungshalbleiterelementen vorbeigeführt.

Ein Schalten des Halbleiterschalters erfolgt vorzugsweise mittels einer Steuereinrichtung, wobei die Steuereinrichtung beispielsweise als Teil einer Antriebssteuerung des Schienenfahrzeugs verwirklicht ist. Die Steuereinrichtung wertet für eine Entscheidung über ein Ansteuern des Halbleiterschalters geeignete Messgrößen aus, aus denen auf ein Vorliegen eines Kurzschlusses oder eines potenziell die Leistungshalbleiterelemente des Stromrichters zerstörenden Stromstoßes geschlossen werden kann. Solche Messgrößen, welche durch in dem Antriebssystem angeordnete geeignete Messeinrichtungen erfasst werden, sind beispielsweise ein Strom an der Eingangsseite und/oder an der Ausgangsseite des Stromrichters, eine Spannung und/oder ein Strom an dem Zwischenkreiskondensator, oder auch Informationen einer die Leistungshalbleiterschalter in dem Stromrichter ansteuernden Steuerschaltungen.

Die Spannungsquelle der Vorrichtung dient dazu, eine Spannung an den Anschlüssen des in einem zu dem ersten Zweig des Halbleiterschalters elektrisch parallel geschalteten zweiten Zweig angeordneten ersten Kondensators anzulegen, die größer als die Spannung an dem Zwischenkreiskondensator ist. Mittels der Vorladung des ersten Kondensators durch die Spannungsquelle wird erreicht, dass die Dioden des ersten Gleichrichters während des normalen Betriebs des Antriebssystems keinen Strom führen und entsprechend keine Schaltverluste erzeugen, welche die Effizienz des Antriebssystems verringern würden. Vorteilhaft ist hierdurch ein Einsatz preiswerter und stoßstromfester Dioden in dem Gleichrichter möglich. Diese können beispielsweise auf Basis von Silizium hergestellt und für einen grundfrequenten Netzbetrieb optimiert sein, während eine Optimierung hinsichtlich eines Betriebs in einem schaltenden Stromrichter nicht erforderlich ist. Dabei bieten sich insbesondere langsam schaltende so genannte Netzdioden an, welche aufgrund einer großen Menge Ladungsträger niedrige Durchlassverluste und damit eine hohe Stoßstromfestigkeit aufweisen.

Eine Kapazität des ersten Kondensators kann dabei im Vergleich zu der Kapazität des Zwischenkreiskondensators klein gewählt werden, da diese zumindest vorwiegend dazu dient, Sperrschichtkapazitäten der Dioden zu kompensieren. Bei einer beispielhaften Zwischenkreisspannung von zwei Kilovolt und einer Leistung des Antriebssystems von einem Megawatt kann die Kapazität des ersten Kondensators zwischen mehreren hundert Nanofarad und mehreren zehn Mikrofarad betragen.

Aufgrund der kleinen Kapazität des ersten Kondensators und nur geringer Leckströme der Dioden des ersten Gleichrichters muss die Spannungsquelle einerseits eine Leistung von lediglich einigen Watt bereitstellen, andererseits muss sie die Spannung an dem ersten Kondensator auf einem Niveau größer der Zwischenkreisspannung halten können, wobei auch den betriebsmäßigen Schwankungen der Zwischenkreisspannung Rechnung getragen werden muss. Dabei kann beispielsweise die Spannung am ersten Kondensator stets höher als die maximal zu erwartende Zwischenkreisspannung einschließlich einer bestimmten Reserve eingestellt werden, oder die Spannung der Spannungsquelle wird stets höher als eine momentane Zwischenkreisspannung einschließlich einer bestimmten Reserve eingestellt. Im letzteren Fall muss die Spannungsquelle entsprechend hinreichend leistungsfähig sein, um die Spannung am ersten Kondensator mit mindestens der gleichen Dynamik nachzuführen, mit der die Zwischenkreisspannung ansteigen kann. Die Reserve kann dabei beispielsweise als ein absoluter oder relativer Wert der Spannung am ersten Kondensator abzüglich der Zwischenkreisspannung bezogen auf die Zwischenkreisspannung definiert sein und beispielsweise zwischen einem und fünfundzwanzig Prozent betragen. Die Spannungsquelle kann beispielsweise als ein Schaltnetzteil ausgestaltet sein, welches insbesondere aus der 110V Bordbatterie des Schienenfahrzeugs oder der Stromversorgung der Steuereinrichtung versorgt wird.

Gemäß einer ersten Weiterbildung der erfindungsgemäßen Vorrichtung umfasst das Antriebssystem ferner einen zweiten Stromrichter, welcher mittels Leistungshalbleiterelementen eine an einer Eingangsseite anliegende Gleichspannung in eine an einer Ausgangsseite anliegende Wechselspannung wandelt, wobei der erste Stromrichter eine an der Eingangsseite anliegende Wechselspannung in eine an der Ausgangsseite anliegende Gleichspannung wandelt, und wobei die ausgangsseitige Gleichspannung des ersten Stromrichters und die eingangsseitige Gleichspannung des zweiten Stromrichters die Zwischenkreisspannung ist, und umfasst die Vorrichtung ferner einen ungesteuerten zweiten Gleichrichter, dessen Eingangsseite mit der Ausgangsseite des zweiten Stromrichters verbunden ist und welcher mittels Halbleiterdioden die an der Ausgangsseite des zweiten Stromrichters anliegende Wechselspannung in eine Gleichspannung wandelt, wobei die Gleichspannung an einer Ausgangsseite des zweiten Gleichrichters anliegt, wobei die Eingangsseite des ersten Gleichrichters mit der Eingangsseite des ersten Stromrichters verbunden ist, und wobei die Ausgangsseiten des ersten und des zweiten Gleichrichters parallel geschaltet sind.

Nach dieser Ausgestaltung des Antriebssystems des Schienenfahrzeugs ist der Gleichspannungszwischenkreis einerseits mit der Ausgangsseite des ersten Stromrichters und andererseits mit der Eingangsseite des ergänzenden zweiten Stromrichters verbunden. Der ergänzende zweite Gleichrichter ist dabei eingangsseitig mit der Ausgangsseite des zweiten Stromrichters verbunden, während der erste Gleichrichter eingangsseitig mit der Eingangsseite des ersten Stromrichters verbunden ist. Auf das einleitend sowie vorstehend beschriebene Antriebssystem für einen Betrieb an einem einen Wechselstrom führenden Versorgungsnetz beispielhaft abgebildet ist der erste Gleichrichter der Vorrichtung eingangsseitig dem netzseitigen Stromrichter zugeordnet, während der zweite Gleichrichter der Vorrichtung eingangsseitig dem lastseitigem Stromrichter zugeordnet ist.

Die Ausgangsseiten der beiden Gleichrichter sind miteinander verbunden bzw. elektrisch parallel geschaltet, sodass ein Schalten des Halbleiterschalters der Vorrichtung einen Kurzschluss sowohl der Eingangsseite des netzseitigen ersten Stromrichters als auch einen Kurzschluss der Ausgangsseite des lastseitigen zweiten Stromrichters bewirkt. Vorteilhaft werden insbesondere bei einem auftretenden Kurzschluss in dem Gleichspannungszwischenkreis sowohl die Leistungshalbleiterelemente des ersten als auch die des zweiten Stromrichters vor Stoßströmen geschützt. Vorteilhaft ist zudem der Einsatz lediglich eines gesteuerten Halbleiterschalters bzw. Thyristors, eines ersten Kondensators sowie einer Spannungsquelle in der Vorrichtung ausreichend, wobei die Kapazität des ersten Kondensators entsprechend der größeren Anzahl Dioden anzupassen ist.

Gemäß einer weiteren Weiterbildung der erfindungsgemäßen Vorrichtung umfasst die Spannungsquelle eine erste Spannungsquelle, wobei die erste Spannungsquelle einerseits mit dem ersten Spannungspotenzial der Ausgangsseite des ersten Gleichrichters und andererseits mit einem ersten Spannungspotenzial der Zwischenkreisspannung verbunden ist, wobei das zweite Spannungspotenzial der Ausgangsseite des ersten Gleichrichters mit dem zweiten Spannungspotenzial der Zwischenkreisspannung verbunden ist, oder die erste Spannungsquelle einerseits mit dem zweiten Spannungspotenzial der Ausgangsseite des ersten Gleichrichters und andererseits mit einem zweiten Spannungspotenzial der Zwischenkreisspannung verbunden ist, wobei das erste Spannungspotenzial der Ausgangsseite des ersten Gleichrichters mit dem ersten Spannungspotenzial der Zwischenkreisspannung verbunden ist.

Nach dieser Ausgestaltung der Vorrichtung ist die erste Spannungsquelle elektrisch in Reihe mit dem Zwischenkreiskondensator geschaltet bzw. entspricht die an der Ausgangsseite des ersten Gleichrichters anliegende Spannung einer Summe der Spannung der ersten Spannungsquelle und der Zwischenkreisspannung. Vorteilhaft muss die erste Spannungsquelle entsprechend den vorstehenden Ausführungen ausschließlich die gewünschte Spannungsdifferenz bereitstellen, wobei die erste Spannungsquelle, sofern die Spannungsdifferenz als ein prozentualer Wert definiert ist, wiederum der Dynamik der Änderung der Zwischenkreisspannung folgen können muss.

Bei einer Ausgestaltung der Vorrichtung gemäß der vorstehenden Weiterbildung mit ausgangsseitig parallel geschalteten ersten und zweiten Gleichrichtern entsprechen die Spannungspotenziale der Ausgangsseite des ersten Gleichrichters entsprechend einem jeweiligen gemeinsamen Spannungspotenzial der Ausgangsseiten beider Gleichrichter.

Gemäß einer auf der vorstehenden Weiterbildung basierenden weiteren Weiterbildung der Vorrichtung umfasst die Spannungsquelle ferner eine zweite Spannungsquelle, wobei die zweite Spannungsquelle einerseits mit dem zweiten Spannungspotenzial der Ausgangsseite des ersten Gleichrichters und andererseits mit einem zweiten Spannungspotenzial der Zwischenkreisspannung verbunden ist, und wobei die erste Spannungsquelle einerseits mit dem ersten Spannungspotenzial der Ausgangsseite des ersten Gleichrichters und andererseits mit einem ersten Spannungspotenzial der Zwischenkreisspannung verbunden ist.

Ergänzend zu der ersten Spannungsquelle gemäß der vorstehenden Weiterbildung weist die Vorrichtung nach dieser Ausgestaltung eine zweite Spannungsquelle auf, welche mit den jeweils anderen Spannungspotenzialen der Ausgangsseite des ersten Gleichrichters und der Zwischenkreisspannung verbunden ist. Nach dieser Ausgestaltung der Vorrichtung sind erste und zweite Spannungsquellen sowie der Zwischenkreiskondensator elektrisch in Reihe geschaltet bzw. entspricht die an der Ausgangsseite des ersten Gleichrichters anliegende Spannung einer Summe der Spannungen der ersten und zweiten Spannungsquellen sowie der Zwischenkreisspannung.

Gegenüber lediglich einer ersten Spannungsquelle gemäß der vorstehenden Weiterbildung müssen die beiden Spannungsquellen eine jeweils geringere Leistungsfähigkeit aufweisen, um die gewünschte Differenzspannung bereitstellen zu können.

Gemäß einer auf einer der beiden vorstehenden Weiterbildung basierenden weiteren Weiterbildung umfasst die Vorrichtung ferner einen zweiten Kondensator, wobei der zweite Kondensator parallel zu der ersten Spannungsquelle geschaltet ist, oder einen zweiten und einen dritten Kondensator, wobei der zweite Kondensator parallel zu der ersten Spannungsquelle geschaltet ist und der dritte Kondensator parallel zu der zweiten Spannungsquelle geschaltet ist.

Nach dieser Ausgestaltung ist ein jeweiliger Kondensator zu der ersten und gegebenenfalls der zweiten Spannungsquelle elektrisch parallel geschaltet. Der bzw. die Kondensatoren dienen dazu, während transienter Vorgänge aufgrund von dynamischen Schwankungen der Zwischenkreisspannung eine jeweilige Ladung für den ersten Kondensator der Vorrichtung bereitzustellen. Hierdurch kann eine ansonsten gegebenenfalls erforderliche Überdimensionierung der Spannungsquelle bzw. der Spannungsquellen vorteilhaft vermieden werden.

Eine Kapazität des jeweiligen Kondensators beträgt vorzugsweise ein Vielfaches, beispielsweise ein fünf- bis fünfundzwanzigfaches, der Kapazität des ersten Kondensators. Da der jeweilige Kondensator im Dauerbetrieb jedoch lediglich für die Betriebsspannung der ersten bzw. der zweiten Spannungsquelle bzw. die Differenzspannung ausgelegt werden muss, welche nach den vorstehenden Ausführungen beispielsweise einem bis fünfundzwanzig Prozent der Zwischenkreisspannung entspricht, kann der Kondensator trotz der großen Kapazität baulich kompakt ausgeführt sein. Lediglich bei einem Einschalten des Halbleiterschalters kann die Spannung an dem jeweiligen Kondensator höher werden.

Alternativ zu den vorstehenden Weiterbildungen bezüglich einer ersten und gegebenenfalls zweiten Spannungsquelle umfasst die Spannungsquelle der Vorrichtung gemäß einer weiteren Weiterbildung eine dritte Spannungsquelle, welche mit dem ersten Spannungspotenzial und mit einem zweiten Spannungspotenzial der Ausgangsseite des ersten Gleichrichters verbunden ist.

Nach dieser Ausgestaltung ist die Spannungsquelle der Vorrichtung elektrisch parallel zu dem zweiten Zweig, in welchem der erste Kondensator angeordnet ist, geschaltet. Beispielsweise kann die dritte Spannungsquelle als ein Schaltnetzteil ausgestaltet sein, welches mittels geeigneter Maßnahmen wie insbesondere einer Anordnung eines ohmschen Widerstands in Reihe zu der dritten Spannungsquelle eine hinreichende Kurzschlussfestigkeit aufweist.

Gemäß einer weiteren Weiterbildung umfasst die Vorrichtung ferner zumindest ein strombegrenzendes Element, welches in dem ersten Zweig in Reihe mit dem ersten Halbleiterschalter geschaltet ist, wobei das strombegrenzende Element insbesondere als eine Induktivität ausgestaltet ist.

Ein solches dem Halbleiterschalter der Vorrichtung zugeordnetes den Strom bzw. eine Stromsteilheit begrenzendes Element ist beispielsweise als eine Drossel ausgestaltet und dient einer Verringerung der Stromsteilheit in dem Halbleiterschalter. Eine Induktivität der Drossel von lediglich mehreren bis mehreren zehn Mikrohenry ist dabei ausreichend, da sie nur für die Dauer der Entladung des ersten Kondensators ausgelegt sein muss. Die Drossel kann beispielsweise als ein sättigbarer Kern, vorzugsweise als ein Ringkern auf einer Stromschiene, verwirklicht sein. Dieser Aufbau bewirkt, dass beispielhaft von dem Traktionstransformator ausgehende Stoßströme, welche eine geringere Stromsteilheit als die Entladungsströme des ersten Kondensators aufweisen, aufgrund der geringen Induktivität im gesättigten Zustand in dem Halbleiterschalter bzw. Thyristor und nicht in den Leistungshalbleiterelementen des netzseitigen Stromrichters fließen.

Gemäß einer weiteren Weiterbildung umfasst die Vorrichtung ferner zumindest ein dämpfendes Element, welches in Reihe mit der zumindest einen Spannungsquelle geschaltet ist, wobei das dämpfende Elemente insbesondere als ein ohmscher Widerstand ausgestaltet ist.

Ein solches der jeweiligen Spannungsquelle zugeordnetes dämpfendes Element, beispielsweise ein ohmscher Widerstand, dient einer Bedämpfung eines parasitären Serienschwingkreises, welcher sich aus den Kapazitäten des Zwischenkreiskondensators, des ersten Kondensators und einer Induktivität, welche sich aus den Induktivitäten der Spannungsquellen sowie der Leitungsinduktivität ergibt.

In einem Zeitraum von einem Abfallen der Spannung an dem Zwischenkreiskondensator bis auf null aufgrund eines Kurschlusses in dem Gleichspannungszwischenkreis bis zum vollständigen Entladen des ersten Kondensators der Vorrichtung über den geschalteten Halbleiterschalter bzw. den gezündeten Thyristor nehmen die dämpfenden Elemente bzw. ohmschen Widerstände die Differenzspannung zwischen der Spannung an dem ersten Kondensator verringert um die Spannungen der Spannungsquellen auf, wodurch die Spannungsquellen vor einer Überlastung bzw. die Kondensatoren in den Spannungsquellen vor einer Überladung geschützt werden. Vorteilhaft können hierdurch Maßnahmen für einen Schutz der Spannungsquellen vor hohen Strömen verringert werden.

Ebenso vermeiden die dämpfenden Elemente bzw. ohmschen Widerstände vorteilhaft ein unerwünschtes Ansteigen der Spannungen an den Kondensatoren der Spannungsquellen, wenn das Schalten des Halbleiterschalters bzw. das Zünden des Thyristors zeitverzögert zu dem Kurzschluss in dem Gleichspannungszwischenkreis erfolgt. In dem Zeitraum zwischen dem Kurzschluss und dem Schalten des Halbleiterschalters übernehmen die dämpfenden Elemente im Wesentlichen die Spannung an dem ersten Kondensator der Vorrichtung.

Gemäß einer weiteren Weiterbildung umfasst die Vorrichtung ferner weitere dämpfende Elemente, welche jeweils in den Verbindungen der Eingangsseite des ersten Gleichrichters mit der Eingangsseite des ersten Stromrichters oder in den Verbindungen der Eingangsseite des ersten Gleichrichters mit der Ausgangsseite des ersten Stromrichters, oder in den Verbindungen der Eingangsseite des ersten Gleichrichters mit der Eingangsseite des ersten Stromrichters und in den Verbindungen der Eingangsseite des zweiten Gleichrichters mit der Ausgangsseite des zweiten Stromrichters angeordnet sind.

Diese dem ersten bzw. ersten und zweiten Gleichrichter der Vorrichtung zugeordnete weitere dämpfende Elemente dienen dazu, durch Schaltvorgänge des ersten bzw. ersten und zweiten Stromrichters angeregte Schwingkreise zu bedämpfen, wobei die Schwingkreise von Sperrschichtkapazitäten der Dioden des jeweiligen Gleichrichters und parasitären Induktivitäten von Verbindungsleitungen, über welche der jeweilige Gleichrichter mit dem Stromrichter verbunden ist, gebildet werden.

Dabei sind die dämpfenden Elemente vorzugsweise derart ausgestaltet, dass sie den über den Halbleiterschalter zu führenden Fehlerstrom nicht bedämpfen. Dieser weist eine wesentlich geringere Frequenz, jedoch eine höhere Amplitude als die Ströme in den angeregten Schwingkreisen auf.

Gemäß einer auf der vorstehenden Weiterbildung basierenden weiteren Weiterbildung umfasst das jeweilige weitere dämpfende Element eine Induktivität und einen zu dieser parallel geschalteten ohmschen Widerstand, wobei der ohmsche Widerstand insbesondere mit einer Sekundärwicklung eines Transformators verbunden ist und eine Primärwicklung des Transformators in der jeweiligen Verbindung angeordnet ist.

Um die Fähigkeit der Vorrichtung, Stoßströme abzuleiten, aufgrund des jeweiligen weiteren dämpfenden Elements nicht zu beeinträchtigen, sollte die jeweilige Induktivität vorzugsweise einen nur geringen ohmschen Innenwiderstand aufweisen. Dieser geringe Innenwiderstand kann beispielsweise dadurch erzielt werden, dass die gewünschte Induktivität hauptsächlich durch ein ferromagnetisches Material erzielt wird. Das Material ist dabei beispielsweise derart zu bemessen, dass es bereits bei einem Bruchteil des erwarteten Stoßstroms, beispielsweise bei 1/300 bis 1/50 des Stoßstroms, in eine magnetische Sättigung geht und damit die wirksame Induktivität stark reduziert wird.

Vorzugsweise kann das jeweilige weitere dämpfende Element einen Transformator umfassen, dessen Sekundärwicklung mit dem ohmschen Widerstand verbunden ist. Das ferromagnetische Material des Transformatorkerns ist in diesem Fall entsprechend den vorstehenden Ausführungen wiederum derart zu bemessen, dass bereits bei einem Bruchteil des erwarteten Stoßstroms die wirksame Induktivität stark reduziert wird.

Ein zweiter Aspekt der Erfindung betrifft ein Antriebssystem für ein Schienenfahrzeug, welches zumindest einen Traktionstransformator mit einer primärseitigen Wicklung und zumindest einer sekundärseitigen Wicklung, wobei die primärseitige Wicklung über einen Stromabnehmer mit einem einen Wechselstrom führenden Versorgungsnetz verbindbar ist, einen ersten Stromrichter, dessen Eingangsseite mit der sekundärseitigen Wicklung des Traktionstransformators verbunden ist und welcher mittels Leistungshalbleiterelementen eine eingangsseitig anliegende Wechselspannung in eine Gleichspannung wandelt, die an einer Ausgangsseite des ersten Stromrichters anliegt, und einen Gleichspannungszwischenkreis, welcher mit der Ausgangsseite des ersten Stromrichters verbunden ist, wobei in dem Gleichspannungszwischenkreis zumindest ein Zwischenkreiskondensator angeordnet ist, an welchem eine von der ausgangsseitigen Gleichspannung des ersten Stromrichters abhängige Zwischenkreisspannung anliegt, umfasst. Das Antriebssystem ist dadurch gekennzeichnet, dass es ferner eine Vorrichtung gemäß den Merkmalen des unabhängigen Vorrichtungsanspruchs umfasst, wobei die Eingangsseite des ersten Gleichrichters mit der Eingangsseite des ersten Stromrichters verbunden ist.

Das Antriebssystem gemäß dem zweiten Aspekt eignet sich in besondere Weise für ein Schienenfahrzeug, welches für einen Betrieb an einem einen Wechselstrom führenden Versorgungsnetz ausgestaltet ist.

Der in dem Gleichspannungszwischenkreis angeordnete Zwischenkreiskondensator kann als ein einziger Kondensator, alternativ jedoch als eine Mehrzahl elektrisch parallel geschalteter Kondensatoren verwirklicht sein.

Gemäß einer Weiterbildung umfasst das erfindungsgemäße Antriebssystem ferner einen zweiten Stromrichter, dessen Eingangsseite mit dem Gleichspannungszwischenkreis verbunden ist und welcher mittels Leistungshalbleiterelementen die eingangsseitig anliegende Gleichspannung in eine mehrphasige Wechselspannung variabler Spannungshöhe und Frequenz wandelt, die an einer Ausgangsseite des zweiten Stromrichters anliegt, und zumindest einen Traktionsmotor mit zumindest einer mehrphasigen Statorwicklung, wobei die zumindest eine Statorwicklung mit der Ausgangsseite des zweiten Stromrichters verbunden ist. Das Antriebssystem ist ferner dadurch gekennzeichnet, dass es eine Vorrichtung gemäß der ersten Weiterbildung aufweist.

Ein dritter Aspekt der Erfindung betrifft ein Antriebssystem für ein Schienenfahrzeug, welches zumindest einen Gleichspannungszwischenkreis, in welchem zumindest ein Zwischenkreiskondensator angeordnet ist, an dem eine Zwischenkreisspannung anliegt, einen ersten Stromrichter, dessen Eingangsseite mit dem Gleichspannungszwischenkreis verbunden ist und welcher mittels Leistungshalbleiterelementen die eingangsseitig anliegende Gleichspannung in eine mehrphasige Wechselspannung variabler Spannungshöhe und Frequenz wandelt, die an einer Ausgangsseite des ersten Stromrichters anliegt, und zumindest einen Traktionsmotor mit zumindest einer mehrphasigen Statorwicklung, wobei die Statorwicklung mit der Ausgangsseite des ersten Stromrichters verbunden ist, umfasst. Das Antriebssystem ist dadurch gekennzeichnet, dass es ferner eine Vorrichtung gemäß den Merkmalen des unabhängigen Vorrichtungsanspruchs umfasst, wobei die Eingangsseite des ersten Gleichrichters mit der Ausgangsseite des ersten Stromrichters verbunden ist.

Das Antriebssystem gemäß dem dritten Aspekt kann vorteilhaft in einem Schienenfahrzeug eingesetzt werden, welches für einen Betrieb an einem einen Gleichstrom führenden Versorgungsnetz ausgestaltet ist, wobei der Gleichspannungszwischenkreis beispielsweise über ein Eingangsfilter aus dem Versorgungsnetz gespeist wird. Entsprechend weist das Antriebssystem ausschließlich einen oder mehrere erste Stromrichter auf, deren Leistungshalbleiterelemente mittels der erfindungsgemäßen Vorrichtung vor von dem zumindest einen Traktionsmotor ausgehenden Stoßströmen geschützt werden. In gleicher Weise kann das Schienenfahrzeug Vorrichtungen aufweisen, mit denen ein für den Betrieb des Schienenfahrzeugs erforderlicher Gleichstrom generierbar ist, beispielsweise eine oder mehrere Traktionsbatterien und/oder Brennstoffzellen.

Ein vierter Aspekt der Erfindung betrifft ein Schienenfahrzeug, welches eine erfindungsgemäße Vorrichtung oder ein erfindungsgemäßes Antriebssystem umfasst.

Ein erfindungsgemäßes Schienenfahrzeug kann beispielsweise als ein Triebzug für den Lokal-, Regional- und Fernverkehr oder als eine Lokomotive ausgestaltet sein, welches für den Betrieb von einem Versorgungsnetz mit elektrischer Energie gespeist wird. Ebenso kann das Schienenfahrzeug Vorrichtungen aufweisen, mit denen eine für den Betrieb des Schienenfahrzeugs erforderliche elektrische Energie generierbar ist, beispielsweise eine oder mehrere Verbrennungskraftmaschinen, welche einen jeweiligen elektrischen Generator antreiben, eine oder mehrere Traktionsbatterien, oder eine oder mehrere Brennstoffzellen.

Ein fünfter Aspekt der Erfindung betrifft schließlich eine Verwendung einer erfindungsgemäßen Vorrichtung für einen Schutz von Leistungshalbleiterelementen eines ersten Stromrichters oder eines ersten und eines zweiten Stromrichters eines Antriebssystems eines Schienenfahrzeugs.

Nachfolgend wird die Erfindung anhand von Ausführungsbeispielen erläutert. Dabei zeigen:
- FIG 1: ein Schienenfahrzeug mit einem Antriebssystem für einen Betrieb an einem Wechselstrom-Versorgungsnetz,
- FIG 2: ein Schienenfahrzeug mit einem Antriebssystem für einen Betrieb an einem Gleichstrom-Versorgungsnetz,
- FIG 3: ein Antriebssystem für ein Schienenfahrzeug der FIG 1 mit einer erfindungsgemäßen Vorrichtung,
- FIG 4: das Antriebssystem der FIG 3 mit weiteren Elementen der Vorrichtung,
- FIG 5: das Antriebssystem und die Vorrichtung der FIG 4 mit lediglich einer Spannungsquelle,
- FIG 6: das Antriebssystem der FIG 3 mit einem weiteren Gleichrichter der Vorrichtung,
- FIG 7: ein Antriebssystem für ein Schienenfahrzeug der FIG 2 mit einer erfindungsgemäßen Vorrichtung, und
- FIG 8: das Antriebssystem der FIG 3 mit einer von dem Zwischenkreis unabhängigen Spannungsquelle

Aus Gründen der Übersichtlichkeit werden in den Figuren für gleiche bzw. gleich oder nahezu gleich wirkende Komponenten dieselben Bezugszeichen verwendet.

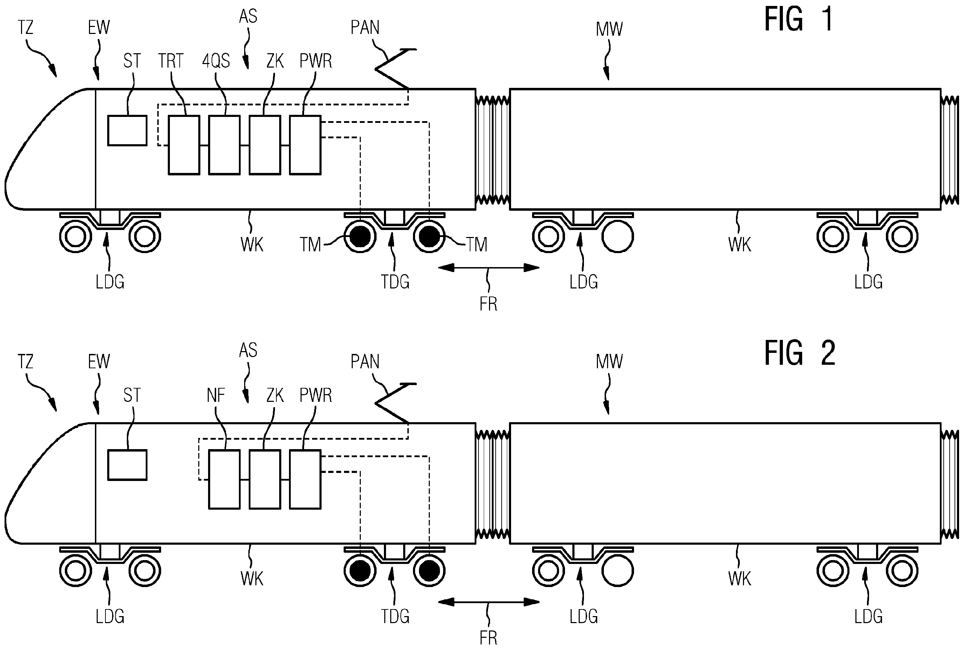

FIG 1 zeigt schematisch ein beispielhaftes Schienenfahrzeug TZ in einer Seitenansicht. Das Schienenfahrzeug TZ ist als ein Triebzug für den Personentransport mit einer Mehrzahl Wagen ausgestaltet, wobei lediglich ein Endwagen EW sowie ein mit diesem gekoppelter Mittelwagen MW dargestellt sind. Beide Wagen verfügen über einen jeweiligen Wagenkasten WK, welcher sich über Drehgestelle in Form eines Triebdrehgestells TDG mit darin angeordneten Traktionsmotoren TM bzw. Laufdrehgestellen LDG ohne Traktionsmotoren auf nicht dargestellten Schienen eines Gleises abstützt. Das Schienenfahrzeug TZ kann sich auf den Schienen in den Fahrtrichtungen FR bewegen.

In dem Endwagen EW sind schematisch Komponenten eines Antriebssystems AS eines an einem Bahnversorgungsnetz betriebenen Schienenfahrzeugs angegeben. Diese sind üblicherweise in speziellen Bereichen innerhalb des Wagenkastens, im Unterflurbereich, im Dachbereich oder auch verteilt über mehrere Wagen des Schienenfahrzeugs TZ angeordnet. Weitere Komponenten der Traktionseinrichtung, beispielsweise eine Traktionsbatterie, sowie für den Betrieb der Komponenten erforderliche Hilfsbetriebe können ergänzend vorgesehen sein, sind in der FIG 1 jedoch nicht speziell dargestellt.

Über einen im Dachbereich des Endwagens EW angeordneten Stromabnehmer PAN ist die Traktionseinrichtung AS mit einer nicht dargestellten Oberleitung des Bahnversorgungsnetzes elektrisch verbindbar, wobei die Oberleitung in dem Beispiel einen Einphasenwechselstrom führt. Diese Wechselspannung wird einer netzseitigen Primärwicklung eines Traktionstransformators TRT zugeführt, in welchem das netzseitige Spannungsniveau von beispielsweise 15kV oder 25kV auf ein niedrigeres Spannungsniveau heruntertransformiert wird. Eine Sekundärwicklung des Transformators TRT ist mit einem netzseitigen Stromrichter 4QS, beispielsweise einem Vierquadrantensteller, verbunden, welcher die Wechselspannung gleichrichtet.

Der netzseitige Stromrichter 4QS speist einen Gleichspannungszwischenkreis ZK, welcher wiederum einen lastseitigen Stromrichter PWR, beispielsweise einen Pulswechselrichter, speist. Der lastseitige Stromrichter PWR generiert aus der Gleichspannung beispielhaft eine Dreiphasenwechselspannung variabler Frequenz und Amplitude, mit welcher die Statorwicklungen von zwei in dem Triebdrehgestell TDG des Endwagens EW angeordneten Traktionsmotoren TM gespeist werden. Gesteuert wird die Funktion insbesondere des netzseitigen 4QS und des lastseitigen Stromrichters PWR in bekannter Weise von einer Steuereinrichtung ST des Antriebssystems AS.

FIG 2 zeigt schematisch das Schienenfahrzeug TZ der FIG 1 mit einem alternativen Antriebssystem. In diesem Beispiel führt die nicht dargestellte Oberleitung des Bahnversorgungsnetzes einen Gleichstrom. Der Gleichstrom wird über ein Eingangsfilter bzw. Netzfilter NF dem Gleichspannungszwischenkreis ZK des Antriebssystems AS zugeführt, wobei das Netzfilter NF beispielsweise eine Filterinduktivität in Form einer Drossel sowie und einen Kondensator umfasst, wobei der Kondensator die Funktion des Zwischenkreiskondensators des Antriebssystems AS der FIG 1 erfüllt.

Ergänzend zu ausschließlich von einem Wechselstrom- oder Gleichstromnetz gespeisten Antriebssystem kann das Antriebssystem eines Schienenfahrzeugs auch mehrsystemfähig sein, d.h. sowohl an einem Wechselstromnetz als auch an einem Gleichstromnetz betrieben werden. In diesem Fall weist das Schienenfahrzeug beispielsweise sowohl einen Stromabnehmer für die Wechselstromversorgung als auch einen Stromabnehmer für die Gleichstromversorgung auf, welche entsprechend mit dem Transformator bzw. direkt oder über wiederum einen Netzfilter mit dem Gleichspannungszwischenkreis des Antriebssystems verbunden sind.

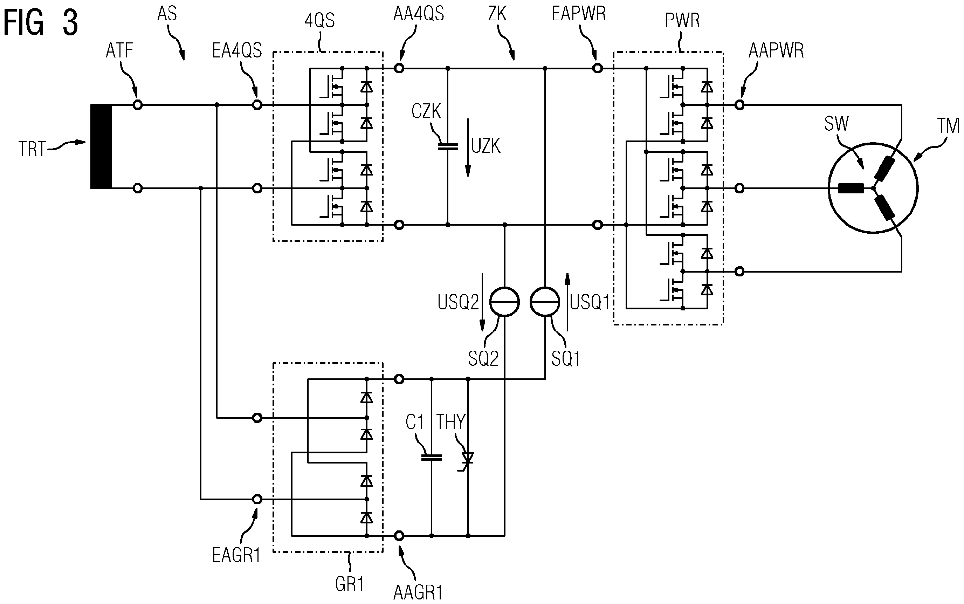

FIG 3 zeigt schematisch das Antriebssystem AS des Schienenfahrzeugs TZ der FIG 1, wobei nicht alle Komponenten des Antriebssystems AS bzw. diese nicht vollständig dargestellt sind. So ist beispielsweise nur eine Sekundärwicklung des Traktionstransformators TRT sowie nur ein Traktionsmotor TM angegeben. Ferner zeigt die FIG 3 eine erste Ausgestaltung der erfindungsgemäßen Vorrichtung.

In dem Antriebssystem AS sind Anschlüsse ATF der Sekundärwicklung des Traktionstransformators TRT mit Eingangsanschlüssen EA4QS des netzseitigen Stromrichters 4QS verbunden. Der netzseitige Stromrichter 4QS ist als ein Vierquadrantensteller ausgestaltet, welcher eine eingangsseitig von dem Traktionstransformator TRT bereitgestellte Wechselspannung in eine Gleichspannung wandelt und ausgangsseitig an Ausgangsanschlüssen AA4QS bereitstellt. Die Wandlung erfolgt dabei mittels Leistungshalbleiterschaltern bzw. Leistungstransistoren, welche entsprechend der einleitenden Erläuterung beispielsweise auf Basis von Halbleitern mit größerem Bandabstand als Silizium, insbesondere Siliziumcarbid (SiC), Galliumnitrid (GaN) oder Diamant, verwirklicht sind. Jeweils zwei Leistungstransistoren sind in einem Schaltzweig elektrisch in Reihe geschaltet, deren Anschlusspunkt mit einem jeweiligen Eingangsanschluss EA4QS des netzseitigen Stromrichters 4QS verbunden sind, wobei für jeden Ausgangsanschluss AA4QS ein paralleler Schaltzweig oder ein ganzzahliges Vielfaches paralleler Schaltzweige vorgesehen ist bzw. sind.

Um auch eine Rückspeisung von elektrischer Energie, welche bei einem Generatorbetrieb der Traktionsmotoren generiert wird, in das Bahnversorgungsnetz zu ermöglichen, ist eine zusätzliche Leistungsdiode antiparallel zu dem jeweiligen Leistungstransistoren geschaltet. Alternativ können die Leistungshalbleiterelemente, insbesondere MOSFET (MetallOxid-Halbleiter-Feldeffekttransistor) auf Basis von Siliziumcarbid (SiC), eine interne so genannte Bodydiode aufweisen, sodass keine zusätzliche antiparallel geschaltete Leistungsdiode erforderlich ist. Die Leistungshalbleiterelemente sind üblicherweise in so genannten Modulen angeordnet, welche an einem Kühlkörper beispielsweise aus Aluminiummaterial befestigt sind, um während des Betriebs des Stromrichters entstehende Verlustwärme abzuführen.

Über die Ausgangsanschlüsse AA4QS speist der netzseitige Stromrichter 4QS einen Gleichspannungszwischenkreis ZK, in dem ein Zwischenkreiskondensator CZK angeordnet ist, wobei alternativ auch mehrere Zwischenkreiskondensatoren CZK elektrisch parallel geschaltet werden können, um eine gewünschte Kapazität bereitzustellen. An dem Zwischenkreiskondensator CZK liegt eine Zwischenkreisspannung UZK an. Mittels einer geeigneten Ansteuerung der Leistungshalbleiterschalter in dem netzseitigen Stromrichter 4QS wird dabei angestrebt, den Spannungswert der Zwischenkreisspannung UZK weitgehend unabhängig von einem schwankenden Spannungswert des Bahnversorgungsnetzes konstant zu halten, wobei üblicherweise mittels eines Saugkreises in dem Zwischenkreis bestehend aus einer Induktivität und einer Kapazität eine grundfrequente Leistungspulsation des Versorgungsnetzes absorbiert wird.

Über Eingangsanschlüsse EAPWR ist der lastseitige Stromrichter PWR mit dem Gleichspannungszwischenkreis ZK verbunden. Der netzseitige Stromrichter PWR ist als ein Pulswechselrichter ausgestaltet, der die eingangsseitige anliegende Gleichspannung in einer Wechselspannung variabler Spannungshöhe und Frequenz wandelt und ausgangsseitig an Ausgangsanschlüssen AAPWR bereitstellt. Die Wandlung erfolgt wiederum mittels Leistungshalbleiterschaltern bzw. Leistungstransistoren, welche vorzugsweise auf Basis von Halbleitern mit größerem Bandabstand als Silizium, insbesondere Siliziumcarbid (SiC), Galliumnitrid (GaN) oder Diamant, verwirklicht sind. Im Unterschied zum netzseitigen Stromrichter 4QS weist der lastseitige Stromrichter PWR für die drei Phasen des Traktionsmotors drei bzw. ein ganzzahliges Vielfaches von drei parallelen Schaltzweigen mit jeweils zwei in Reihe geschalteten Leistungstransistoren auf. Wiederum dienen antiparallel zu den Leistungstransistoren geschaltete Leistungsdioden einer Rückspeisefähigkeit von bei einem Generatorbetrieb von dem Traktionsmotor generierter elektrischer Energie. Der von dem lastseitigen Stromrichter PWR gespeiste Traktionsmotor TM ist als eine Drehstrommaschine, insbesondere eine Asynchron- oder Synchron-Drehstrommaschine, ausgestaltet, deren drei Phasen der Statorwicklung SW mit den Ausgangsanschlüssen AAPWR des lastseitigen Stromrichters PWR verbunden sind.

FIG 3 zeigt ferner eine erfindungsgemäße Vorrichtung, die einem Schutz der Leistungshalbleiterelemente in dem netzseitigen Stromrichter 4QS von Stoßströmen, wie sie bei einem Kurzschluss in dem Gleichspannungszwischenkreis auftreten können, dient. Die Vorrichtung weist einen ersten Gleichrichter GR1, beispielsweise einen so genannten ungesteuerten B4U-Brückengleichrichter mit vier Halbleiterdioden auf, um die einphasige Wechselspannung der Sekundärwicklung des Traktionstransformators TRT in eine Gleichspannung zu wandeln.

Die Eingangsanschlüsse EAGR1 des ersten Gleichrichters GR1 sind mit den Ausgangsanschlüssen ATF der Sekundärwicklung des Traktionstransformators bzw. den Eingangsanschlüssen EA4QS des netzseitigen Stromrichters 4QS bzw. mit den Verbindungen zwischen den Ausgangsanschlüssen ATF der Sekundärwicklung und den Eingangsanschlüssen EA4QS des Stromrichters verbunden. Die Ausgangsanschlüsse AAGR1 des ersten Gleichrichters GR1 sind mit einer Parallelschaltung aus einem Halbleiterschalter THY und einem ersten Kondensator C1 verbunden, wobei der Halbleiterschalter THY beispielhaft als ein Thyristor ausgestaltet ist, welcher von der Steuereinrichtung ST, welche in der FIG 3 nicht speziell dargestellten ist, bei einem Kurzschluss angesteuert bzw. gezündet wird. Die Steuereinrichtung ST wertet für das Erkennen eines Kurzschlusses in dem Gleichspannungszwischenkreis ZK und anschließendes Ansteuern des Halbleiterschalters THY beispielsweise Signale bzw. Informationen von nicht speziell dargestellten Sensoren aus. Derartige Sensoren messen beispielsweise einen Strom an einem oder beiden Eingangsanschlüssen EA4QS des netzseitigen Stromrichters 4QS, einen Strom in den Zwischenkreiskondensator CZK und/oder eine Spannung an dem Zwischenkreiskondensator CZK. Ergänzend oder alternativ können auch Informationen von den Leistungshalbleiterelementen bzw. -modulen, welche einen Rückschluss auf eine Fehlfunktion eines Leistungshalbleiterelements erlauben, von der Steuereinrichtung ST für die Entscheidung über die Ansteuerung des Halbleiterschalters THY verwendet werden.

Ferner sind die Ausgangsanschlüsse AAGR1 des ersten Gleichrichters GR1 mit den Ausgangsanschlüssen AA4QS des netzseitigen Stromrichters 4QS bzw. mit dem Zwischenkreiskondensator CZK bzw. mit den Verbindungen zwischen den Ausgangsanschlüssen AA4QS des netzseitigen Stromrichters 4QS und den Eingangsanschlüssen EAPWR des lastseitigen Stromrichter PWR verbunden. In den Verbindungen der Ausgangsanschlüsse AAGR1 des ersten Gleichrichters GR1 mit dem Gleichspannungszwischenkreis ZK ist eine jeweilige Spannungsquelle SQ1, SQ2 angeordnet, welche eine jeweilige Spannung USQ1, USQ2 bereitstellen. Durch die Reihenschaltung der beiden Spannungsquellen SQ1, SQ2 mit dem Zwischenkreiskondensator CZK entspricht die an dem ersten Kondensator C1 der Vorrichtung anliegende Spannung der Summe aus der jeweiligen Spannung USQ1, USQ2 der beiden Spannungsquellen SQ1, SQ2 und der an dem Zwischenkreiskondensator CZK anliegenden Zwischenkreisspannung UZK. Die von den Spannungsquellen SQ1, SQ2 bereitgestellten Spannungen sind dabei derart bemessen, dass die an dem ersten Kondensator C1 der Vorrichtung anliegende Spannung zwischen 1% und 25%, vorzugsweise zwischen 5% und 20%, höher als die Zwischenkreisspannung UZK ist. Bei einer beispielhaften Zwischenkreisspannung UZK von 2kV stellen die Spannungsquellen entsprechend eine jeweilige Spannung zwischen 10V und 250V bereit.

Die höhere Spannung an dem ersten Kondensator C1 der Vorrichtung dient dabei dazu, eine Stromführung der Dioden des ersten Gleichrichters GR1 während des normalen Betriebs des Antriebssystems AS zu vermeiden, da eine solche nachteilig zu Verlusten führen würde. Eine Kapazität des ersten Kondensators C1 ist derart gewählt, dass diese größer als die Summe der Sperrschichtkapazitäten der Dioden des ersten Gleichrichters GR1 ist. Die erforderliche Mindestkapazität des ersten Kondensators C1 und damit dessen physikalischen Abmaße sind insbesondere im Vergleich zu der Kapazität und den Abmaßen des Zwischenkreiskondensators CZK jedoch gering bzw. klein. Bei einer wiederum beispielhaften Zwischenkreisspannung UZK von 2kV kann die Kapazität des Kondensators insbesondere zwischen einhundert Nanofarad und mehreren zehn Mikrofarad betragen. Die geringe Kapazität des ersten Kondensators C1 des ersten Gleichrichters GR1 sowie die geringen Leckströme der Dioden ermöglichen den Einsatz preiswerter Spannungsquellen SQ1, SQ2, die abhängig von dem gewünschten Spannungswert eine Leistung von lediglich wenigen Watt bereitstellen müssen. Dabei ist die Leistungsfähigkeit der Spannungsquellen SQ1, SQ2 jedoch derart zu bemessen, dass diese Schwankungen der Zwischenkreisspannung UZK, welche aufgrund von Schwankungen der netzseitigen Spannung oder auch der Traktionsmotoren hervorgerufen werden, mit einer gleichen Dynamik folgen, um die gewünschte Spannungsdifferenz zwischen der an dem ersten Kondensator C1 anliegenden Spannung und der Zwischenkreisspannung UZK konstant bzw. nahezu konstant halten zu können.

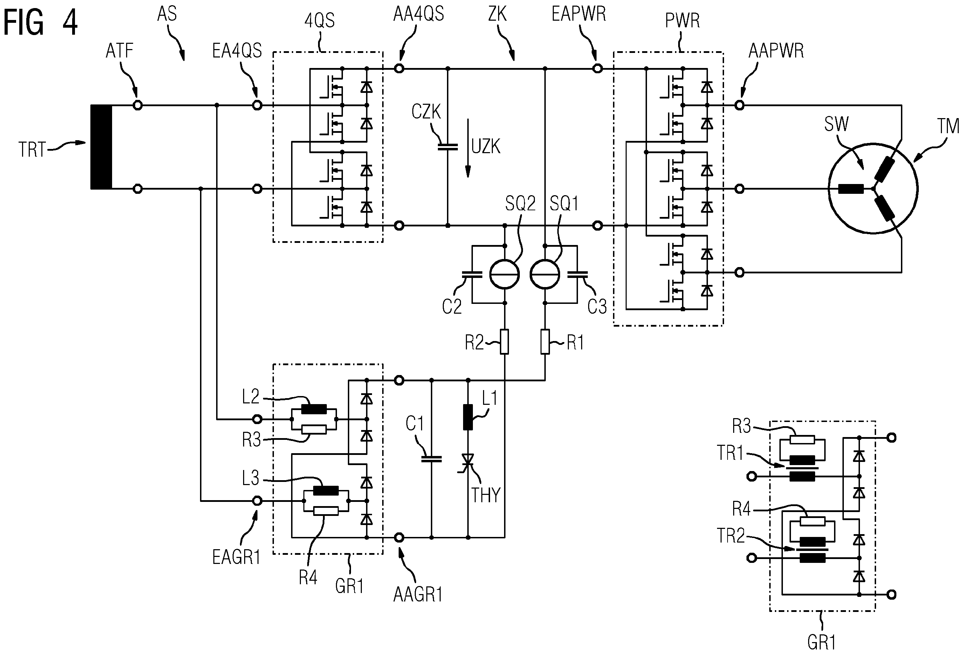

FIG 4 zeigt das Antriebssystem der FIG 3 mit ergänzenden Elementen. Diese müssen nicht zwingend gemeinsam und vollständig in der Vorrichtung angeordnet werden.

Diese möglichen ergänzenden Elemente umfassen zum einen zu der ersten und zweiten Spannungsquelle SQ1, SQ2 parallel geschaltete zweite bzw. dritte Kondensatoren C2, C3. Diese dienen dazu, während transienter Vorgänge aufgrund von dynamischen Schwankungen der Zwischenkreisspannung UZK eine jeweilige Ladung für den ersten Kondensator C1 der Vorrichtung bereitzustellen. Der zweite und der dritte Kondensator weisen jeweils eine fünf- bis fünfundzwanzigfache Kapazität des ersten Kondensators C1 auf, wobei sie aufgrund der niedrigeren Betriebsspannung der ersten und zweiten Spannungsquellen trotzdem baulich kompakt ausgeführt sein können.

Zum anderen sind in Reihe mit den Spannungsquellen SQ1, SQ2 erste und zweite ohmsche Widerstände R1, R2 geschaltet, die insbesondere einer Bedämpfung eines parasitären Serienschwingkreises, welcher sich aus den Kapazitäten des Zwischenkreiskondensators CZK und ersten Kondensators C1 sowie Induktivitäten der Spannungsquellen SQ1, SQ2 und Leitungen ergibt, dienen.

Die zweiten und dritten Kondensatoren C2, C3 können prinzipiell auch die Funktion des ersten Kondensators C1 übernehmen bzw. diesen ersetzen, da diese mit dem Zwischenkreiskondensator CZK in Reihe geschaltet und damit wie der erste Kondensator C1 in einem parallelen Zweig zu dem Halbleiterschalter THY angeordnet sind. In diesem Fall sind erster und zweiter ohmscher Widerstand R1, R2 vorzugsweise klein zu dimensionieren und, sofern erforderlich, eine Bedämpfung auf eine andere Art zu implementieren.

Des Weiteren ist in dem ersten Zweig der Vorrichtung und in Reihe mit dem Halbleiterschalter THY eine erste Induktivität L1, insbesondere eine erste Drossel, vorgesehen zur Verringerung der Stromsteilheit in dem Halbleiterschalter THY. Beispielsweise kann die erste Induktivität als ein Ringkern auf einer Stromschiene ausgestaltet sein.

An der Eingangsseite des ersten Gleichrichters GR1 sind ergänzende Parallelschaltungen aus einer jeweiligen Induktivität L2 bzw. L3 und einem ohmschen Widerstand R3 bzw. R4 vorgesehen. Diese dienen einer Bedämpfung von Schwingkreisen, die sich aus den Sperrschichtkapazitäten der Dioden des ersten Gleichrichters GR1 und parasitären Induktivitäten von Verbindungsleitungen bilden.

In dem unteren rechten Bereich der FIG 4 ist eine alternative Ausgestaltung des ersten Gleichrichters GR1 ergänzend dargestellt. Gemäß dieser Ausgestaltung sind die ohmschen Widerstände R3, R4 über einen jeweiligen Transformator TR1 bzw. TR2 mit den Eingängen des ersten Gleichrichters GR1 gekoppelt. Dabei ist der jeweilige ohmsche Widerstand R3 bzw. R4 parallel zu einer Sekundärwicklung eines Transformators TR1 bzw. TR2 geschaltet, während die Primärwicklung des jeweiligen Transformators TR1 bzw. TR2 in einer Verbindung des Anschlusspunkts der in Reihe geschalteten Dioden mit einem Eingangsanschluss des ersten Gleichrichters GR1 angeordnet ist.

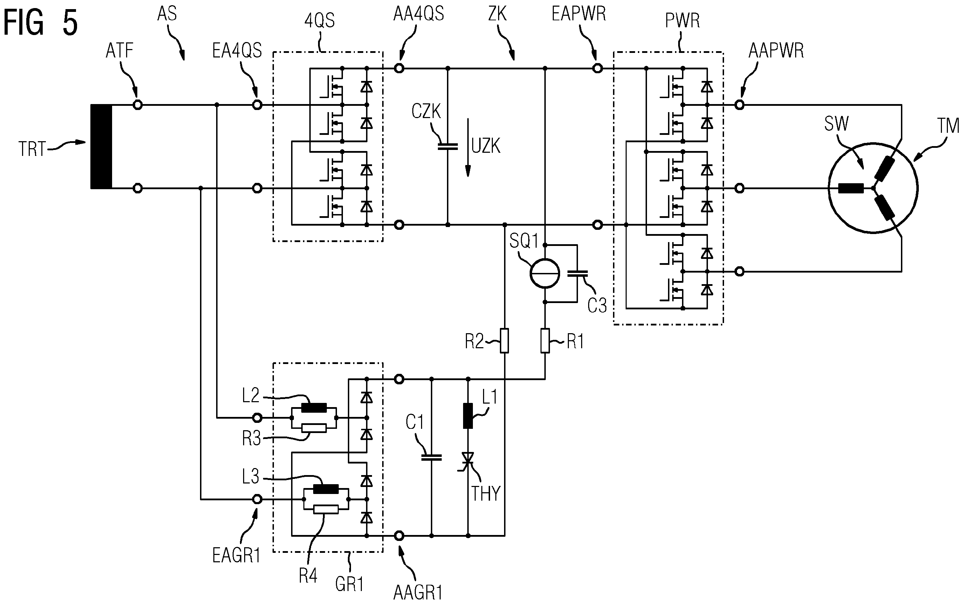

FIG 5 zeigt das Antriebssystem der FIG 4 mit einer erfindungsgemäßen Vorrichtung, wobei die Vorrichtung im Unterschied zu der Vorrichtung der FIG 4 lediglich eine erste Spannungsquelle SQ1 aufweist. Alternativ zu der Anordnung in dem dargestellten rechten Zweig in Reihe mit dem ersten ohmschen Widerstand R1 kann die erste Spannungsquelle SQ1 in gleicher Weise in dem linken Zweig in Reihe mit dem zweiten ohmschen Widerstand R2 angeordnet werden.

Im Vergleich zu den zwei Spannungsquellen SQ1, SQ2 der Ausgestaltung der Vorrichtung der FIG 4 muss die eine erste Spannungsquelle entsprechend eine höhere Spannung und damit eine höhere Leistung bereitstellen, um wiederum die gewünschte Spannungsdifferenz zwischen der an dem ersten Kondensator C1 anliegenden Spannung und der Zwischenkreisspannung UZK konstant bzw. nahezu konstant halten zu können. Der zweite ohmsche Widerstand R2 muss, zusammen mit den eingangsseitig des ersten Gleichrichters GR1 angeordneten Dämpfungselementen L2/R3 sowie L3/R4, dabei einen so hohen Spannungsabfall erzeugen, dass die mit diesem verbundenen Dioden keinen Stromanteil übernehmen, der von dem netzseitigen Stromrichter 4QS geführt werden soll.

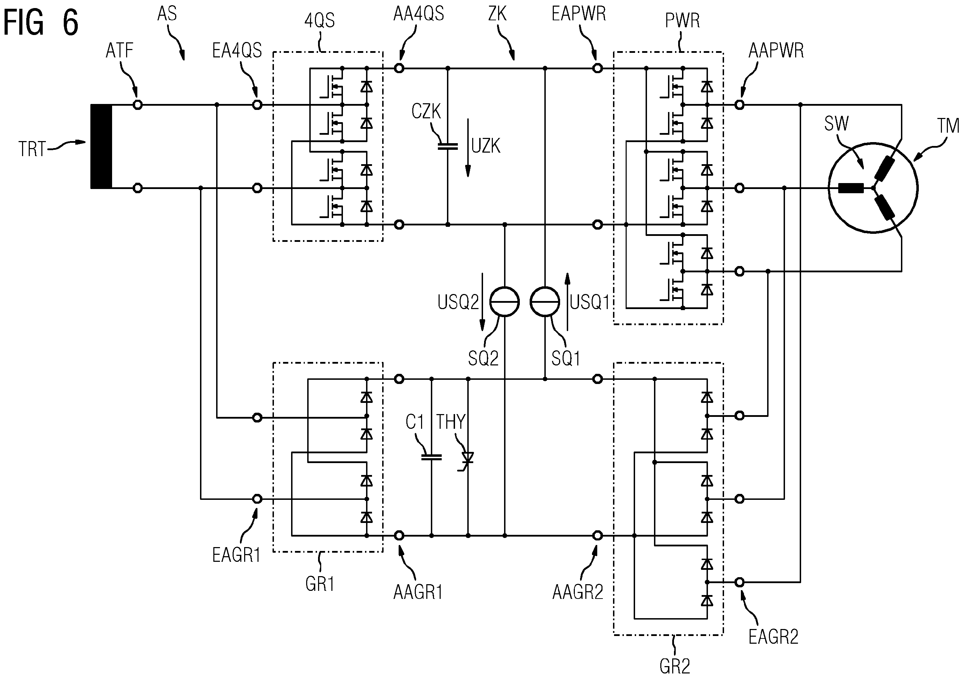

FIG 6 zeigt das Antriebssystem der FIG 3 mit einer weiteren Ausgestaltung der Vorrichtung, wobei diese ergänzend zu einem Schutz der Leistungshalbleiterelement des netzseitigen Stromrichters 4QS auch einen Schutz der Leistungshalbleiterelemente des lastseitigen Stromrichters PWR vor von dem Traktionsmotor verursachten Stoßströmen bietet.

Hierzu weist die Vorrichtung einen zweiten Gleichrichter GR2 auf, welcher beispielhaft als ein ungesteuerter B6U-Brückengleichrichter mit sechs Halbleiterdioden ausgestaltet ist, um die dreiphasige Wechselspannung der Statorwicklung SW des Traktionsmotors TM wiederum in eine Gleichspannung zu wandeln. Die Eingangsanschlüsse EAGR2 des zweien Gleichrichters GR21 sind mit den Ausgangsanschlüssen AAPWR des lastseitigen Stromrichters PWR bzw. den Phasen der Statorwicklung SW verbunden. Die Ausgangsanschlüsse AAGR2 des zweiten Gleichrichters GR2 sind mit der Parallelschaltung aus dem Halbleiterschalter THY und dem ersten Kondensator C1 verbunden.

Die Steuereinrichtung ST wertet für das ergänzende Erkennen eines von dem Traktionsmotor TM ausgehenden Stoßstroms Signale bzw. Informationen von wiederum nicht speziell dargestellten Sensoren, welche beispielsweise den jeweiligen Strom in den Phasen der Statorwicklung SW messen, sowie von den Leistungshalbleiterelementen bzw. -modulen des lastseitigen Stromrichters PWR aus, um basierend auf diesen eine Entscheidung über das Schalten bzw. Zünden des Halbleiterschalters THY der Vorrichtung zu treffen.

Die Vorrichtung der FIG 6 kann die in den Vorrichtungen der FIG 4 und 5 ergänzten Elemente in gleicher Weise aufweisen, wobei diese ergänzend auch für den zweiten Gleichrichter GR2 umgesetzt werden können.

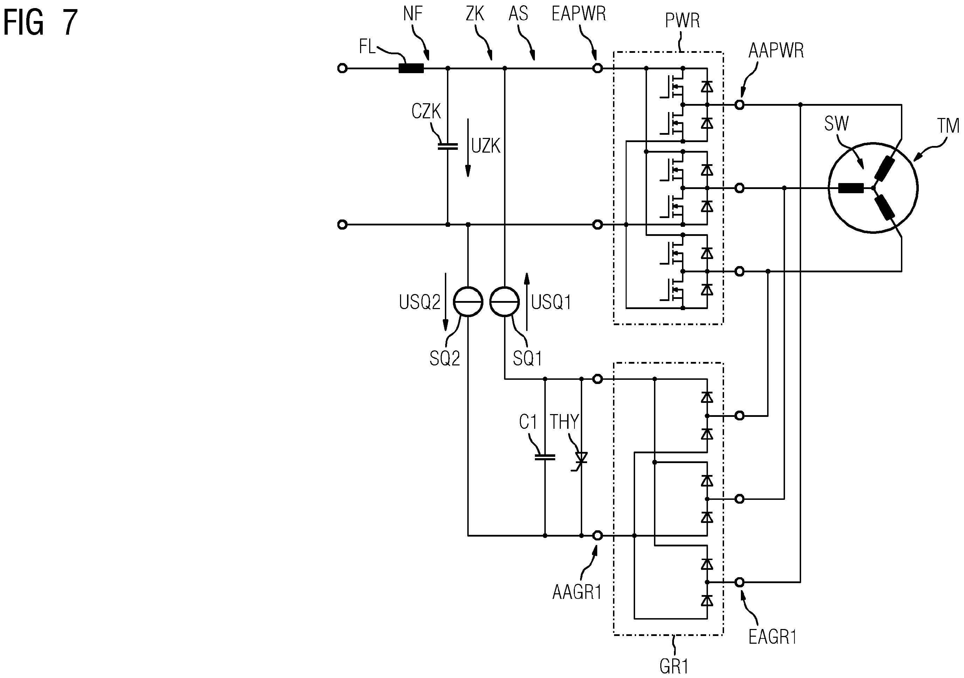

FIG 7 zeigt schematisch das Antriebssystem AS des Schienenfahrzeugs TZ der FIG 2, wobei wiederum nicht alle Komponenten des Antriebssystems AS bzw. diese nicht vollständig dargestellt sind. Das Antriebssystem AS ist ausgestaltet, mit einem einen Gleichstrom führenden Bahnversorgungsnetz über einen Stromabnehmer verbunden zu werden, wobei der Gleichstrom beispielhaft über ein Eingangsfilter bzw. Netzfilter NF bestehend aus einer Filterinduktivität FL in Form einer Drossel sowie dem Zwischenkreiskondensator CZK dem Stromrichter PWR zugeführt wird. Die Filterinduktivität FL bildet zusammen mit dem Zwischenkreiskondensator CZK einen Serienschwingkreis, welcher auf die Frequenzen der zu filternden Störströme abgestimmt ist. Der Stromrichter PWR ist entsprechend den vorstehenden Beispielen beispielhaft als ein Pulswechselrichter ausgestaltet, der die an den Eingangsanschlüssen EAPWR anliegende Gleichspannung in eine Dreiphasen-Wechselspannung variabler Spannungshöhe und Frequenz wandelt, mit welcher die Statorwicklung SW des Traktionsmotors TM gespeist wird.

Der Gleichrichter GR1 ist als ein ungesteuerter B6U-Brückengleichrichter mit sechs Halbleiterdioden ausgestaltet, dessen Eingangsanschlüsse EAGR1 mit den Ausgangsanschlüssen AAPWR des Stromrichters PWR bzw. den drei Phasen der Statorwicklung SW des Traktionsmotors TM verbunden sind. Die Ausgangsanschlüsse AAGR1 des Gleichrichters GR1 sind mit der Parallelschaltung aus dem Halbleiterschalter THY und dem ersten Kondensator C1 sowie mit den Eingangsanschlüssen EAPWR des Stromrichters PWR bzw. mit dem Zwischenkreiskondensator CZK verbunden. In den Verbindungen der Ausgangsanschlüsse AAGR1 des Gleichrichters GR1 mit dem Gleichspannungszwischenkreis ZK sind wiederum Spannungsquellen SQ1, SQ2 angeordnet, welche eine jeweilige Spannung USQ1, USQ2 bereitstellen.

Entsprechend dem Ausführungsbeispiel der FIG 6 wertet die Steuereinrichtung ST für das Erkennen eines von dem Traktionsmotor TM ausgehenden Stoßstroms Signale bzw. Informationen von Sensoren, die beispielsweise den jeweiligen Strom in den Phasen der Statorwicklung SW messen, sowie von den Leistungshalbleiterelementen bzw. -modulen des Stromrichters PWR aus, um basierend auf diesen eine Entscheidung über das Schalten bzw. Zünden des Halbleiterschalters THY der Vorrichtung zu treffen. Ebenfalls kann die Vorrichtung der FIG 7 in den Vorrichtungen der FIG 4 und 5 ergänzte Elemente in entsprechender Weise aufweisen.

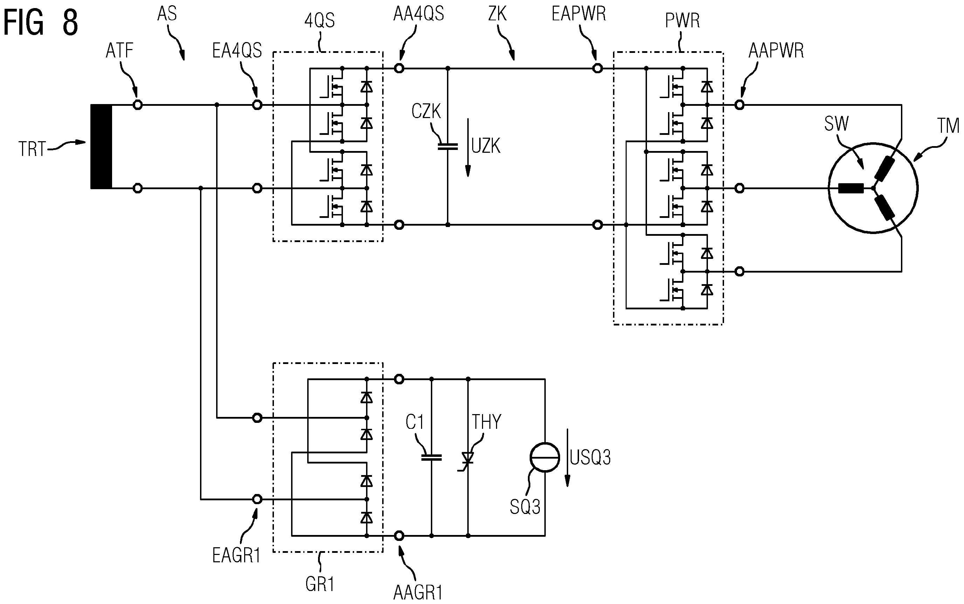

FIG 8 zeigt das Antriebssystem der FIG 3 mit einer weiteren alternativen Ausgestaltung der Vorrichtung. Im Unterschied zu der Vorrichtung nach FIG 3 erfolgt eine Vorladung des ersten Kondensators C1 nicht mittels zwei mit dem Gleichspannungszwischenkreis ZK verbundenen Spannungsquellen SQ1, SQ2, sondern mittels einer von dem Gleichspannungszwischenkreis ZK unabhängigen dritten Spannungsquelle SQ3. Die dritte Spannungsquelle SQ3 ist beispielsweise als ein kurzschlussfestes Schaltnetzteil ausgestaltet, wobei dessen Kurzschlussfestigkeit durch steuerungstechnische Maßnahmen und/oder durch einen nicht dargestellten in Reihe geschalteten ohmschen Widerstand erzielt werden kann. Die Spannung USQ3 der dritten Spannungsquelle SQ3 wird von der Steuereinrichtung ST beispielsweise abhängig von einer gemessenen Zwischenkreisspannung UZK eingestellt, sodass die Spannung USQ3 entsprechend den vorstehenden Ausführungen um eine bestimmte Spannungsdifferenz höher ist als die Zwischenkreisspannung UZK.

### Bezugszeichen

- 4QS: erster Stromrichter
- AA4QS: Ausgangsanschlüsse erster Stromrichter
- AAGR1: Ausgangsanschlüsse erster Gleichrichter
- AAGR2: Ausgangsanschlüsse zweiter Gleichrichter
- AAPWR: Ausgangsanschlüsse zweiter Stromrichter
- ATF: Anschlüsse Sekundärwicklung Transformator
- C1,C2,C3: erster, zweiter, dritter Kondensator
- CZK: Zwischenkreiskondensator
- EA4QS: Eingangsanschlüsse erster Stromrichter
- EAGR1: Eingangsanschlüsse erster Gleichrichter
- EAGR2: Eingangsanschlüsse zweiter Gleichrichter
- EAPWR: Eingangsanschlüsse zweiter Stromrichter
- EF: Eingangsfilter
- EW: Endwagen
- FL: Filterinduktivität
- FR: Fahrtrichtung
- GR1,GR2: erster, zweiter Gleichrichter
- L1,L2,L3: erste, zweite, dritte Induktivität
- LDG: Laufdrehgestell
- MW: Mittelwagen
- NF: Eingangsfilter, Netzfilter
- PAN: Stromabnehmer
- PWR: zweiter Stromrichter
- R1,R2,R3,R4: ohmscher Widerstand
- SQ1,SQ2,SQ3: erste, zweite, dritte Spannungsquelle
- ST: Steuereinrichtung
- SW: Statorwicklung
- TDG: Triebdrehgestell
- TE: Antriebssystem
- TM: Traktionsmotor
- TR1,TR2: erster, zweiter Transformator
- TRT: Traktionstransformator
- TZ: Triebzug
- USQ1, USQ2, USQ3: Spannung erste, zweite, dritte Spanungsquelle
- WK: Wagenkasten
- ZK: Zwischenkreis/Gleichspannungszwischenkreis

## Patentansprüche

1. Vorrichtung zum gesteuerten Herstellen eines Kurzschlusses in einem Antriebssystem (AS) eines Schienenfahrzeugs (TZ), wobei das Antriebssystem (AS) umfasst:
- einen ersten Stromrichter (4QS,PWR), welcher mittels Leistungshalbleiterelementen eine an einer Eingangsseite anliegende Wechselspannung in eine an einer Ausgangsseite anliegende Gleichspannung wandelt, oder welcher eine an der Eingangsseite anliegende Gleichspannung in eine an der Ausgangsseite anliegende Wechselspannung wandelt, und
- einen Gleichspannungszwischenkreis (ZK), welcher von der Ausgangsseite des ersten Stromrichters (4QS) gespeist wird oder welcher die Eingangsseite des ersten Stromrichters (PWR) speist, und in welchem zumindest ein Zwischenkreiskondensator (CZK) angeordnet ist, an dem eine Zwischenkreisspannung (UZK) anliegt,
**dadurch gekennzeichnet, dass**
die Vorrichtung umfasst:
- einen ungesteuerten ersten Gleichrichter (GR1), dessen Eingangsseite mit der Eingangsseite des ersten Stromrichters (4QS) verbunden ist und welcher mittels Halbleiterdioden die an der Eingangsseite des ersten Stromrichters (4QS) anliegende Wechselspannung in eine Gleichspannung wandelt, oder dessen Eingangsseite mit der Ausgangsseite des ersten Stromrichters (PWR) verbunden ist und welcher mittels Halbleiterdioden die an der Ausgangsseite des ersten Stromrichters (PWR) anliegende Wechselspannung in eine Gleichspannung wandelt, wobei die Gleichspannung jeweils an einer Ausgangsseite des ersten Gleichrichters (GR1) anliegt,
- einen gesteuerten Halbleiterschalter (THY), welcher in einem ersten Zweig angeordnet ist, der mit einem ersten Spannungspotenzial und mit einem zweiten Spannungspotenzial der Ausgangsseite des ersten Gleichrichters (GR1) verbunden ist, wobei mittels des Halbleiterschalters (THY) die Ausgangsseite des ersten Gleichrichters (GR1) gesteuert kurzschließbar ist,
- zumindest einen ersten Kondensator (C1), wobei der erste Kondensator (C1) in einem zweiten Zweig angeordnet ist, welcher zu dem ersten Zweig parallel geschaltet ist, und
- zumindest eine Spannungsquelle (SQ1, SQ2, SQ3), mittels welcher eine an dem ersten Kondensator (C1) anliegende Spannung oberhalb der Zwischenkreisspannung (UZK) eingestellt wird.

2. Vorrichtung nach Anspruch 1,
**dadurch gekennzeichnet, dass**
das Antriebssystem (AS) ferner umfasst:
- einen zweiten Stromrichter (PWR), welcher mittels Leistungshalbleiterelementen eine an einer Eingangsseite anliegende Gleichspannung in eine an einer Ausgangsseite anliegende Wechselspannung wandelt, wobei der erste Stromrichter (4QS) eine an der Eingangsseite anliegende Wechselspannung in eine an der Ausgangsseite anliegende Gleichspannung wandelt, und wobei die ausgangsseitige Gleichspannung des ersten Stromrichters (4QS) und die eingangsseitige Gleichspannung des zweiten Stromrichters (PWR) die Zwischenkreisspannung (UZK) ist,
und die Vorrichtung ferner umfasst:
- einen ungesteuerten zweiten Gleichrichter (GR2), dessen Eingangsseite mit der Ausgangsseite des zweiten Stromrichters (PWR) verbunden ist und welcher mittels Halbleiterdioden die an der Ausgangsseite des zweiten Stromrichters (PWR) anliegende Wechselspannung in eine Gleichspannung wandelt, wobei die Gleichspannung an einer Ausgangsseite des zweiten Gleichrichters (GR2) anliegt, wobei die Eingangsseite des ersten Gleichrichters (GR1) mit der Eingangsseite des ersten Stromrichters (4QS) verbunden ist, und wobei die Ausgangsseiten des ersten und des zweiten Gleichrichters (GR2) parallel geschaltet sind.

3. Vorrichtung nach Anspruch 1 oder 2,
**dadurch gekennzeichnet, dass**
die Spannungsquelle eine erste Spannungsquelle (SQ1) umfasst, wobei
- die erste Spannungsquelle (SQ1) einerseits mit dem ersten Spannungspotenzial der Ausgangsseite des ersten Gleichrichters (GR1) und andererseits mit einem ersten Spannungspotenzial der Zwischenkreisspannung (UZK) verbunden ist, wobei das zweite Spannungspotenzial der Ausgangsseite des ersten Gleichrichters (GR1) mit dem zweiten Spannungspotenzial der Zwischenkreisspannung (UZK) verbunden ist, oder
- die erste Spannungsquelle (SQ1) einerseits mit dem zweiten Spannungspotenzial der Ausgangsseite des ersten Gleichrichters (GR1) und andererseits mit einem zweiten Spannungspotenzial der Zwischenkreisspannung (UZK) verbunden ist, wobei das erste Spannungspotenzial der Ausgangsseite des ersten Gleichrichters (GR1) mit dem ersten Spannungspotenzial der Zwischenkreisspannung (UZK) verbunden ist.

4. Vorrichtung nach Anspruch 3,
**dadurch gekennzeichnet, dass**
die Spannungsquelle ferner eine zweite Spannungsquelle (SQ2) umfasst, wobei
- die zweite Spannungsquelle (SQ2) einerseits mit dem zweiten Spannungspotenzial der Ausgangsseite des ersten Gleichrichters (GR1) und andererseits mit einem zweiten Spannungspotenzial der Zwischenkreisspannung (UZK) verbunden ist, und
- die erste Spannungsquelle (SQ1) einerseits mit dem ersten Spannungspotenzial der Ausgangsseite des ersten Gleichrichters (GR1) und andererseits mit einem ersten Spannungspotenzial der Zwischenkreisspannung (UZK) verbunden ist.

5. Vorrichtung nach Anspruch 3 oder 4,
**dadurch gekennzeichnet, dass**
die Vorrichtung ferner umfasst:
- einen zweiten Kondensator (C2), wobei der zweite Kondensator (C2) parallel zu der ersten Spannungsquelle (SQ1) geschaltet ist, oder
- einen zweiten (C2) und einen dritten Kondensator (C3), wobei der zweite Kondensator (C2) parallel zu der ersten Spannungsquelle (SQ1) geschaltet ist und der dritte Kondensator (C3) parallel zu der zweiten Spannungsquelle (SQ2) geschaltet ist.

6. Vorrichtung nach Anspruch 1 oder 2,
**dadurch gekennzeichnet, dass**
die Spannungsquelle eine dritte Spannungsquelle (Q3) umfasst, welche mit dem ersten Spannungspotenzial und mit einem zweiten Spannungspotenzial der Ausgangsseite des ersten Gleichrichters (GR1) verbunden ist

7. Vorrichtung nach einem der vorstehenden Ansprüche,
**dadurch gekennzeichnet, dass**
die Vorrichtung ferner umfasst:
zumindest ein strombegrenzendes Element (L1), welches in dem ersten Zweig in Reihe mit dem ersten Halbleiterschalter (THY) geschaltet ist, wobei das strombegrenzende Element (L1) insbesondere als eine Induktivität ausgestaltet ist.

8. Vorrichtung nach einem der vorstehenden Ansprüche,
**dadurch gekennzeichnet, dass**
die Vorrichtung ferner umfasst:
zumindest ein dämpfendes Element (R1, R2), welches in Reihe mit der zumindest einen Spannungsquelle (SQ1, SQ2) geschaltet ist, wobei das dämpfende Elemente (R1, R2) insbesondere als ein ohmscher Widerstand ausgestaltet ist.

9. Vorrichtung nach Anspruch 1 oder 2,
**dadurch gekennzeichnet, dass**
die Vorrichtung ferner umfasst:
weitere dämpfende Elemente (L2, R3, L3, R4), welche jeweils
- in den Verbindungen der Eingangsseite des ersten Gleichrichters (GR1) mit der Eingangsseite des ersten Stromrichters (4QS) oder in den Verbindungen der Eingangsseite des ersten Gleichrichters (GR1) mit der Ausgangsseite des ersten Stromrichters (PWR), oder
- in den Verbindungen der Eingangsseite des ersten Gleichrichters (GR1) mit der Eingangsseite des ersten Stromrichters (4QS) und in den Verbindungen der Eingangsseite des zweiten Gleichrichters (GR2) mit der Ausgangsseite des zweiten Stromrichters (PWR)
angeordnet sind.

10. Vorrichtung nach Anspruch 9,
**dadurch gekennzeichnet, dass**
das jeweilige weitere dämpfende Element eine Induktivität (L2, L3) und einen zu dieser parallel geschalteten ohmschen Widerstand (R3, R4) umfasst, wobei der ohmsche Widerstand (R3, R4) insbesondere mit einer Sekundärwicklung eines Transformators (TR1, TR2) verbunden ist und eine Primärwicklung des Transformators (TR1, TR2) in der jeweiligen Verbindung angeordnet ist.

11. Antriebssystem (AS) für ein Schienenfahrzeug (TZ),
wobei das Antriebssystem (AS) zumindest umfasst:
- einen Traktionstransformator (TRT) mit einer primärseitigen Wicklung und zumindest einer sekundärseitigen Wicklung, wobei die primärseitige Wicklung über einen Stromabnehmer (PAN) mit einem einen Wechselstrom führenden Versorgungsnetz verbindbar ist,
- einen ersten Stromrichter (4QS), dessen Eingangsseite mit der sekundärseitigen Wicklung des Traktionstransformators (TRT) verbunden ist und welcher mittels Leistungshalbleiterelementen eine eingangsseitig anliegende Wechselspannung in eine Gleichspannung wandelt, die an einer Ausgangsseite des ersten Stromrichters (4QS) anliegt, und
- einen Gleichspannungszwischenkreis (ZK), welcher mit der Ausgangsseite des ersten Stromrichters (4QS) verbunden ist, wobei in dem Gleichspannungszwischenkreis (ZK) zumindest ein Zwischenkreiskondensator (CZK) angeordnet ist, an welchem eine von der ausgangsseitigen Gleichspannung des ersten Stromrichters (4QS) abhängige Zwischenkreisspannung (UZK) anliegt,
**dadurch gekennzeichnet, dass**
das Antriebssystem (AS) ferner umfasst:
eine Vorrichtung nach Anspruch 1, wobei die Eingangsseite des ersten Gleichrichters (GR1) mit der Eingangsseite des ersten Stromrichters (4QS) verbunden ist.

12. Antriebssystem (AS) nach Anspruch 11,
**dadurch gekennzeichnet, dass**
das Antriebssystem (AS) ferner umfasst:
- einen zweiten Stromrichter (PWR), dessen Eingangsseite mit dem Gleichspannungszwischenkreis (ZK) verbunden ist und welcher mittels Leistungshalbleiterelementen die eingangsseitig anliegende Gleichspannung in eine mehrphasige Wechselspannung variabler Spannungshöhe und Frequenz wandelt, die an einer Ausgangsseite des zweiten Stromrichters (PWR) anliegt, und
- zumindest einen Traktionsmotor (TM) mit zumindest einer mehrphasigen Statorwicklung (SW), wobei die zumindest eine Statorwicklung (SW) mit der Ausgangsseite des zweiten Stromrichters (PWR) verbunden ist,
**dadurch gekennzeichnet, dass**
das Antriebssystem (AS) ferner umfasst:
eine Vorrichtung nach Anspruch 2.

13. Antriebssystem (AS) für ein Schienenfahrzeug (TZ),
wobei das Antriebssystem (AS) zumindest umfasst:
- einen Gleichspannungszwischenkreis (ZK), in welchem zumindest ein Zwischenkreiskondensator (CZK) angeordnet ist, an dem eine Zwischenkreisspannung (UZK) anliegt,
- einen ersten Stromrichter (PWR), dessen Eingangsseite mit dem Gleichspannungszwischenkreis (ZK) verbunden ist und welcher mittels Leistungshalbleiterelementen die eingangsseitig anliegende Gleichspannung in eine mehrphasige Wechselspannung variabler Spannungshöhe und Frequenz wandelt, die an einer Ausgangsseite des ersten Stromrichters (PWR) anliegt, und
- zumindest einen Traktionsmotor (TM) mit zumindest einer mehrphasigen Statorwicklung (SW), wobei die Statorwicklung (SW) mit der Ausgangsseite des ersten Stromrichters (PWR) verbunden ist,
**dadurch gekennzeichnet, dass**
das Antriebssystem (AS) ferner umfasst:
eine Vorrichtung nach Anspruch 1, wobei die Eingangsseite des ersten Gleichrichters (GR1) mit der Ausgangsseite des ersten Stromrichters (PWR) verbunden ist.

14. Schienenfahrzeug (TZ),
**dadurch gekennzeichnet, dass**
das Schienenfahrzeug (TZ) eine Vorrichtung nach einem der Ansprüche 1 bis 10 oder ein Antriebssystem (AS) nach einem der Ansprüche 11 bis 13 umfasst.

15. Verwendung einer Vorrichtung nach einem der Ansprüche 1 bis 10 für einen Schutz von Leistungshalbleiterelementen eines ersten Stromrichters (4QS) oder eines ersten (4QS) und eines zweiten Stromrichters (PWR) eines Antriebssystems (AS) eines Schienenfahrzeugs (TZ).
